# EUROPÄISCHE PATENTANMELDUNG

(11) **EP 4 265 087 A1**
(43) Veröffentlichungstag der Anmeldung: **25.10.2023**
(21) Anmeldenummer: 23168645.2
(22) Anmeldetag: 19.04.2023
(51) Int. Cl.: A01B 39/18

(54) **VORRICHTUNGSMODUL ZUR BEARBEITUNG EINES KULTURBODENS, ANHÄNGER FÜR EINE ZUGMASCHINE UND DEREN VERWENDUNG**

(30) Priorität: 19.04.2022 DE 102022109461
(71) Anmelder: Feldklasse GmbH, 40670 Meerbusch (DE)
(72) Erfinder: Dülks, André, 40668 Meerbusch (DE); Rüttger, Lisa, 42781 Haan (DE); Kentenich, Steffen, 50354 Hürth (DE)
(74) Vertreter: karo IP

(57) **Zusammenfassung**

Die Erfindung betrifft ein Vorrichtungsmodul (1) zur Bearbeitung eines Kulturbodens (2), zumindest umfassend einen Träger (3) mit einer Vorderkante (4) und einer Hinterkante (5), an dem mindestens zwei Werkzeuge (6, 13) lateral mit einem Abstand (20) zueinander angeordnet sind, wobei dem Träger (3) mindestens eine Verschwenkeinheit (21) zum Verschwenken der Werkzeuge (6, 13) zugeordnet ist, wobei weiter jedes Werkzeug (6, 13) einen Stiel (7, 14) und eine Scharre (8, 15) aufweist, wobei jede Scharre (8, 15) eine hin zum Träger (3) gerichtete Oberfläche (9, 16) hat, die von einem Rand (10, 17) der Scharre (8, 15) begrenzt ist, in der jeweils ein Stiel (7, 14) in einem Mündungspunkt (11, 18) mündet, wobei der Mündungspunkt (11, 18) des Stiels (7, 14) auf der Oberfläche (9, 16) der Scharre (8, 15) exzentrisch und entfernt zum Rand (10, 17) der Scharre (8, 15) angeordnet ist und lateral am Rand (10, 17) mindestens eine Klinge (41) ausbildet. Die mindestens eine Verschwenkeinheit (21) führt das Verschwenken der Werkzeuge (6, 13) um eine Verschwenkachse (40) entlang der Stiele (7, 14) aus. Weiter werden damit ausgestattete Anhänger (29) und bevorzugte Verwendungen angegeben.

## Beschreibung

Die vorliegende Erfindung betrifft ein Vorrichtungsmodul zur Bearbeitung eines Kulturbodens, einen damit ausgerüsteten Anhänger für eine Zugmaschine sowie deren Verwendungen.

Die Erfindung betrifft insbesondere die mechanische Unkrautbekämpfung in landwirtschaftlichen Reihenkulturen. Hierbei ist besonders schwierig, nah an der Reihe und in der Reihe zwischen den Kulturpflanzen Unkraut zu beseitigen. Dafür sind Reihen-Hackmaschinen bekannt, die als Selektivhacke bezeichnet werden und in der Pflanzenreihe und nah an die Reihe heranarbeiten. Weiter sind Reihen-Hackmaschinen bekannt, die als Präzisionshacke (nur) nah an die Reihe heranarbeiten. Beide Reihen-Hackmaschinen werden im frühen bis mittelspäten Kulturpflanzenstadium eingesetzt.

Neben den vorstehend genannten Reihen-Hackmaschinen können weitere Maschineneinheiten betrieben werden, die ausschließlich den Reihenzwischenraum bearbeiten, dabei weiter weg von der Kulturpflanzenreihe bleiben. Die Maschineneinheiten für den Reihenzwischenraum werden eingesetzt, um eine lückenlose Bearbeitung zu ermöglichen. Bei geringen Reihenabständen können ggf. Werkzeuge zur Bearbeitung des Reihenzwischenraumes auch an den Reihen-Hackmaschinen angeordnet werden.

In der Regel zieht ein Traktor oder ein autonomes Fahrzeug die Reihen-Hackmaschinen. Die Reihen-Hackmaschinen kann einen quer zur Fahrtrichtung verlaufenden Rahmen aufweisen, an dem mehrere Maschineneinheiten nebeneinander angeordnet sind, so dass mehrere Reihen gleichzeitig bzw. parallel mit einer Überfahrt bearbeitet werden können.

Im Ackerbau und insbesondere bei Mulchsaat, Direktsaat und anderen Saatverfahren mit reduzierter Bodenbearbeitung, wie z. B. beim Strip-Till (nicht ganzflächige, sondern lediglich streifenförmige Auflockerung des Kulturbodens) können organische Reste vorheriger Pflanzen die Reihen-Hackmaschinen verstopfen.

Weiter können frische Pflanzen wie große oder viele Unkräuter, Untersaaten oder Intercropping (Anbau von mehreren Kulturen in der gleichen Parzelle) zu Verstopfungen durch frisches Pflanzenmaterial führen.

Zudem kann die junge Kulturpflanze durch sich bewegende und/oder schiebende Erde selbst an Bodenschluss verlieren und/oder verschüttet werden und somit verenden.

Insbesondere bei tonhaltigen Kulturböden kann sich eine Kruste auf der Oberfläche bilden. Die Kruste kann in größere Stücke von 1-5 cm Kantenlänge brechen. Ein Verschieben der Krustenstücke in Bereiche, in denen die Kulturpflanze wächst, ist im frühen Kulturpflanzenstadium unbedingt zu vermeiden, da dadurch unter der Kruste die Wurzel der Kulturpflanze an Bodenschluss verlieren kann und dann vertrocknen würde.

Hiervon ausgehend ist es Aufgabe der vorliegenden Erfindung, die mit Bezug auf den Stand der Technik benannten Probleme zumindest zu lindern oder zumindest teilweise zu lösen. Insbesondere sollen Vorrichtungen angegeben werden, die eine möglichst schonende bzw. umfassende Bearbeitung eines Kulturbodens ermöglichen, wobei das Risiko einer Beschädigung der Kulturpflanze reduziert und/oder die Verstopfungsneigung der Werkzeuge bzw. Reihen-Hackmaschinen gemindert wird. Es soll ggf. auch erreicht werden, dass das Werkzeug bzw. die Reihen-Hackmaschinen robust ist und/oder einfach auf die Umgebungsbedingungen oder Wünsche des Nutzers angepasst betrieben werden kann.

Hierzu trägt ein Vorrichtungsmodul mit den Merkmalen des Anspruchs 1 bei. Weitere vorteilhafte Ausgestaltungen des Vorrichtungsmoduls, ein Anhänger für eine Zugmaschine und eine Verwendung dieser Komponenten werden in den abhängigen Ansprüchen angegeben. Es ist darauf hinzuweisen, dass die Merkmale in den Ansprüchen in beliebiger, technologisch sinnvoller Weise miteinander kombiniert werden können und weitere Ausgestaltungen der Erfindung bezeichnen. Die Beschreibung, insbesondere im Zusammenhang mit den beiliegenden Figuren, veranschaulicht die Erfindung und offenbart weitere Ausführungsbeispiele.

Es wird ein Vorrichtungsmodul zur Bearbeitung eines Kulturbodens vorgeschlagen, das einen Träger umfasst, welcher mit einer Vorderkante sowie einer Hinterkante ausgeführt ist und an dem mindestens zwei Werkzeuge lateral mit einem Abstand zueinander angeordnet sind. Dem Träger ist weiter mindestens eine Verschwenkeinheit zum Verschwenken der Werkzeuge zugeordnet. Jedes Werkzeug weist einen Stiel und eine Scharre auf, wobei jede Scharre eine hin zum Träger gerichtete Oberfläche hat, die von einem Rand der Scharre begrenzt ist. In der jeweiligen Oberfläche mündet jeweils ein Stiel in einem Mündungspunkt, wobei der Mündungspunkt des Stiels auf der Oberfläche der Scharre exzentrisch und entfernt zum Rand der Scharre angeordnet ist. Weiter ist lateral am Rand mindestens eine Klinge ausbildet.

Das Vorrichtungsmodul kann insbesondere ein Maschinenelement oder Maschinenaggregat sein, welches geeignet zur Integration in eine Reihen-Hackmaschine ist. Weiter ist es bzw. sind seine Komponenten so robust, witterungsunempfindlich, etc. ausgeführt, dass dieses für den Ackerbau bzw. die Bearbeitung von Kulturböden geeignet ist. Insbesondere ist möglich, dass das Vorrichtungsmodul mit Anschlusselementen ausgeführt ist, dass dieses flexibel mit anderen Vorrichtungsmodulen und/oder -aggregaten an einem Anhänger für eine Zugmaschine kombiniert befestigt und/oder ausgerichtet angeordnet werden kann.

Das bzw. jedes Vorrichtungsmodul hat bevorzugt einen einzelnen Träger, der insbesondere als Basis für die Lagerung bzw. Befestigung der (bevorzugt auch einzelnen) Verschwenkeinheit und der Werkzeuge dient. Es ist möglich, dass der Träger nach Art einer Platte und/oder eines (teilweise offenen) Gehäuses ausgeführt ist. Ein solcher Träger kann eine bevorzugte bzw. große (Quer-)Dimension haben, entlang der eine Vorderkante sowie eine Hinterkante vorgesehen ist. Die Bezeichnung "Vorder-" und "Hinter-"kante veranschaulicht insbesondere die Sicht auf den Träger in Fahrtrichtung später im Einsatz, was für den Fachmann insbesondere aus der Anordnung der Werkzeuge leicht zu erkennen ist. Die Vorderkante und die Hinterkante können zumindest abschnittsweise im Wesentlichen senkrecht zur Fahrtrichtung angeordnet sein. Auf den konkreten Verlauf der Vorderkante und Hinterkante kommt es tatsächlich nicht an, vielmehr dient deren räumliche Lage vorrangig dazu, eine Richtung (bzw. die spätere Fahrtrichtung) festzulegen, die bei der Beschreibung der Ausrichtung bzw. Ausgestaltung der Werkzeuge hilfreich ist. Lateral bzw. seitlich zu der Vorderkante und Hinterkante kann der Träger jeweils eine Seitenkante aufweisen. Senkrecht zur (Fahrt-)Richtung ist regelmäßig eine Querrichtung bestimmbar bzw. festlegbar.

Bevorzugt hat der Träger genau zwei Werkzeuge, die zueinander lateral, also mit Bezug auf die Querrichtung, mit einem Abstand angeordnet sind. Der Abstand beträgt insbesondere eine Größe, bei der sichergestellt ist, dass die Kulturpflanze im Kulturboden zwischen den Werkzeugen hindurchgeführt werden kann. Bevorzugt beträgt der Abstand beispielsweise mindestens 150 mm [Millimeter] und ist besonders bevorzugt in einem Bereich von 150 mm bis 250 mm. Insbesondere beträgt der Abstand ca. 200 mm.

Weiter kann der Träger so gestaltet sein, dass dieser die Werkzeuge in der beanstandeten Position lagert, wobei die Verschwenkeinheit so angeordnet und eingerichtet ist, dass diese mit den Werkzeugen interagiert. Es ist möglich, dass die Werkzeuge und die Verschwenkeinheit gegenüberliegend zu dem Träger angeordnet sein, wobei die Werkzeuge (überwiegend) an einer zum Kulturboden gerichteten Unterseite und die Verschwenkeinheit an einer Oberseite des Trägers positioniert sind. Es ist möglich, dass die Werkzeuge den Träger durchdringen, wobei ein Werkzeugelement, das hindurchragt, mit der Verschwenkeinheit in Wirkeingriff gebracht sein kann. Die Verschwenkeinheit führt eine "reine" Verschwenkung der Werkzeuge um eine Achse aus, also insbesondere keine räumliche Verlagerung bzw. translatorische Verfahrbewegung (der Stiele) der Werkzeuge relativ zum Träger aus.

Jedes Werkzeug weist einen Stiel und eine (Hack-)Scharre auf. Der Stiel erstreckt sich dabei insbesondere von dem Träger bis hin zur Scharre. Der Stiel kann nach Art eines Rohres, Stabes, etc. ausgeführt sein. Die Stiellänge kann beispielsweise im Bereich von 150 bis 500 mm [Millimeter] betragen. Es ist bevorzugt, dass der Stiel einen rotationssymmetrischen Querschnitt hat, damit dieser einfach beim Verschwenken an dem Träger gelagert werden kann. Der Stiel dient insbesondere dazu mindestens eine Scharre ausgehend von dem Träger hin zum Kulturboden beabstandet zu verfahren bzw. zu halten.

Die Scharre des Werkzeugs hat eine hin zum Träger gerichtete Oberfläche, die von einem Rand der Scharre begrenzt ist. Da die Oberfläche hin zum Träger gerichtet ist, ist sie im Einsatz dann nach oben gerichtet. Die Scharre ist folglich nicht linien- oder drahtförmig aufgebaut, sondern hat eine Oberfläche mit einem vorgegebenen Flächeninhalt. Die Oberfläche kann eine Form aufweisen, die beispielsweise aus Blickrichtung des Trägers etwa dreieckig ist. Bevorzugt ist die Oberfläche so ausgebildet, dass eine oder zwei langestreckte bzw. zumindest teilweise gerade oder gekrümmte Klingen gebildet sind, die beispielsweise von mindestens 30 % des Randes, insbesondere von 30% bis 40% des Randes der Scharre ausgeformt ist.

In der jeweiligen Oberfläche der Scharre mündet jeweils ein Stiel in einem sogenannten Mündungspunkt. Das bedeutet mit anderen Worten insbesondere, dass der Stil nicht seitlich zu dieser Oberfläche verläuft und/oder seitlich an der Scharre fixiert ist. Bevorzugt setzt der Stiel auf der Oberfläche auf oder durchdringt diese sogar. Der Mündungspunkt kann daher als Kontaktbereich des Stiels auf der Oberfläche der Scharre beschreiben werden. Der Mündungspunkt kann auch als (zentraler) Auftreffpunkt des Stiels auf der Oberfläche bezeichnet werden.

Der Mündungspunkt des Stiels auf bzw. in der Oberfläche der Scharre ist exzentrisch und entfernt zum Rand der Scharre angeordnet. "Exzentrisch" meint in diesem Zusammenhang insbesondere, dass der Mündungspunkt (insbesondere definiert durch den Verlauf der Schwenkachse oder Zentrumsachse des Stiels) nicht mit dem Flächenmittelpunkt der Oberfläche übereinstimmt, sondern dazu benachbart positioniert ist. "Entfernt vom Rand" meint in diesem Zusammenhang insbesondere, dass der Mündungspunkt, insbesondere der Stiel, nicht (unmittelbar) an den Rand angrenzt. So kann sichergestellt werden, dass z. B. eine ausreichende Distanz von einer Klinge der Scharre zu dem Stiel eingehalten wird, wodurch eine unerwünschte Anlagerung oder Umschlingung von Unkraut dort reduziert oder sogar verhindert werden kann.

Bevorzugt ist die Oberfläche mit einem im Wesentlichen bzw. überwiegend ebenen bzw. flachen Oberflächenprofil ausgeführt. Die Oberfläche kann z. B. mit einem ebenen (Kontur)-Blech ausgeführt sein, wobei (nur) an deren lateralem Rand mindestens eine Klinge, also insbesondere ein Randbereich mit sich verjüngendem Querschnitt, ausgebildet ist.

Es ist möglich, dass die Scharre am Rand eine nach vorne bzw. in Fahrtrichtung gerichtete Klingenspitze aufweist, von der lateral jeweils eine Klinge ausgeht, die sich lateral und nach hinten erstreckt. Bevorzugt ist in diesem Fall, dass die äußere laterale Klinge länger und/oder geradliniger ausgeführt ist als die innere. Es ist möglich, dass die äußere laterale Klinge geradlinig und die innere lateral Klinge mit einem (Kreis-)Bogenabschnitt ausgeführt ist. Der Bogenabschnitt der inneren lateralen Klinge kann so gestaltet sein, dass die Scharre beim Einschwenken in die Reihe der Kulturpflanzen diese mit einem Sicherheitsabstand umschwenkt.

Optional ist die Oberfläche mit einem spezifischen, insbesondere nicht ebenen, Oberflächenprofil ausgeführt. Das Oberflächenprofil kann auch als Kontur der Oberfläche bezeichnet werden. Das Oberflächenprofil kann eine sphärische bzw. komplexe Kontur aufweisen, wobei hier insbesondere eine Konturline betrachtet in Richtung von der Hinterkante zu der Vorderkante (bzw. in Fahrtrichtung) von besonderer Bedeutung ist. In dieser Blickrichtung ist vorgegeben, dass sich das Oberflächenprofil bzw. diese Konturlinie ausgehend vom Mündungspunkt weiter von dem Träger entfernt. Betrachtet man wieder den Einsatz des Werkzeugs, heißt das mit anderen Worten, dass das Oberflächenprofil abfällt, sich also weiter hin zum Kulturboden bzw. tiefer in den Kulturboden hinein erstreckt. Zudem ist das Oberflächenprofil so gestaltet, dass ein (insbesondere die vorstehend beschriebene Konturline umfassender bzw. einschließender) Abschnitt des Oberflächenprofils lateral (seitlich, also insbesondere nach außen) geneigt ist. Dies kann gewährleisten, dass im Einsatz Bodenfragmente des Kulturbodens über die Oberfläche der Scharre nach außen, also aus den Reihen der Kulturpflanzen heraus, geschoben werden können.

Das Vorrichtungsmodul ist insbesondere so eingerichtet, dass mittels der Verschwenkeinheit der Stiel des Werkzeugs verschwenkt wird, so dass der Stiel bei einer Fahrt in Fahrtrichtung parallel zur Kulturpflanzenreihe in einer vorgegebenen Position zur Kulturpflanzenreihe verbleibt, insbesondere um auch bei einem Verschwenken der Scharre eine gleichbleibende Arbeitstiefe und ein permanenter Untergriff einstellbar ist. Weiter kann das Oberflächenprofil der Scharre so gestaltet sein, dass eine Klingenkante bzw. -spitze nach vorne bzw. in Fahrtrichtung gerichtet ist (ggf. auch etwas zur Reihe hin) und folglich (in jeder Schwenkstellung) Erde von der Reihe weggeleitet wird.

Die mindestens eine Verschwenkeinheit führt das Verschwenken der Werkzeuge um eine Verschwenkachse entlang der Stiele aus. Mit anderen Worten bedeutet das insbesondere, dass die zentralen Achsen der Stiele jeweils eine Verschwenkachse darstellen, um die die Scharre(n) herum verschwenkt werden können. Insbesondere wird während dieser Bewegung der Schiel (nur) verschwenkt, also z. B. nicht zusätzlich (räumlich) verlagert und/oder geneigt. Die Lage der Scharren zueinander und/oder zum Vorrichtungsmodul bleibt somit während des Verschwenkens bevorzugt beibehalten (wenn sich die Kulturbodenverhältnisse und/oder der Aufbau der Reihen der Kulturpflanzen nicht wesentlich ändert). Bevorzugt ist, dass die mindestens eine Klinge zumindest mit einer Distanz von 1,5 cm vor dem Mündungspunkt positioniert ist. Das meint mit anderen Worten insbesondere, dass die Anordnung der Klinge so erfolgt, dass während des gesamten Verschwenkens in einem vorgegebenen Schwenkbereich die Klinge (in Fahrtrichtung bzw. nach vorne) vorgelagert positioniert ist.

Die Vorderkante des Schares zeigt also in allen Zuständen von offenem zu geschlossenem Werkzeug immer von der Reihe weg, um den Erd- und Gutfluss immer von der Reihe weg zu leiten. Die Klinge ist mit einer Distanz von 1,5 cm vor dem Mündungspunkt positioniert, und zwar ebenso in allen Zuständen von offenem zu geschlossenem Werkzeug. Die Distanz von 1,5 cm vor dem Mündungspunkt betrifft im Einsatz insbesondere die Distanz in Fahrtrichtung, und dann insbesondere sowohl in den Zuständen von offenem und geschlossenem Werkzeug.

Die mindestens eine Verschwenkeinheit führt das Verschwenken der Werkzeuge über einen beschränkten Schwenkbereich von 0 bis maximal 120 Winkelgrad aus, wobei die Vorgabe zum Oberflächenprofil (Oberfläche hat ein Oberflächenprofil, das sich betrachtet in einer Richtung von der Hinterkante zu der Vorderkante ausgehend vom Mündungspunkt weiter von dem Träger entfernt und lateral geneigt ist) über diesen Schwenkbereich eingehalten ist.

Der beschränkte Schwenkbereich ist insbesondere durch eine Teilschwenkung der Stiele bzw. Scharren ermittelbar. Üblicherweise verschwenkt das Werkzeug dabei von einer äußeren Endposition in eine innere Endposition, wobei die Bezeichnung "außen" und "innen" relativ zur zentralen Achse des Trägers bzw. im Einsatz zur Kulturpflanzenreihe zu verstehen ist.

Die Beschränkung erfolgt über einen Bereich von 0 bis 80 Winkelgrad, wobei der Schwenkbereich ggf. in vorgegebene bzw. beliebige Teil-Winkelbereiche noch einstellbar bzw. unterteilbar ist. Der Winkelbereich kann auch auf 60 Winkelgrad oder sogar nur 40 Winkelgrad beschränkt sein. Möglich ist beispielsweise, dass das Vorrichtungsmodul so eingerichtet ist, dass mehrere beschränkte Teil-Winkelbereiche einstellbar sind. Die (alle wahlweise und alternativ) verfügbaren Teil-Winkelbereiche können von 0° bis W₁°, 0° bis W₂°,..., 0 bis Wᵢ° und 0° bis 80° erfassen, wobei gilt: W₁°<W₂°<...<Wᵢ°<80°. Diese Teil-Winkelbereiche sind insbesondere mechanisch einstellbar. Bevorzugt geht der Winkelbereich von der äußeren Endposition (0°) aus. Es ist möglich, dass sich die beschränkten Schwenkbereiche der am Träger befestigten Werkzeuge bzw. Scharren annähern, berühren und/oder sogar überlappen. Bei der Position der Scharren an der inneren Endposition des Schwenkbereichs sind sich die Scharren am nächsten bzw. überdecken sich sogar teilweise (gesehen in Fahrtrichtung).

Hierbei ist das Oberflächenprofil so gestaltet, das die Vorgabe, wonach sich dieses (in Fahrtrichtung betrachtet) ausgehend vom Mündungspunkt weiter von dem Träger entfernt und lateral (nach außen) geneigt ist, über den gesamten Schwenkbereich eingehalten ist, also auch bei jeder Stellung der Scharren während der Teilschwenkung.

Es ist bevorzugt, dass die Vorgabe, wonach die Klingen (in Fahrtrichtung betrachtet) lateral angeordnet sind, über den gesamten Schwenkbereich eingehalten ist, also auch bei jeder Stellung der Scharren während der Teilschwenkung. Das bedeutet mit anderen Worten beispielsweise, dass eine äußere laterale Klinge so ausgebildet und angeordnet ist, dass diese einen dem Stiel vorgelagerten Randbereich bildet, mit dem auch während des Einwärtsverschwenkens und während der Fahrt Material (Unkraut, Erde, etc.) vom Stiel beabstandet und/oder nach außen, also von der Reihe Kulturpflanzen weg, abgleitet werden kann.

Die mindestens eine Verschwenkeinheit kann insbesondere ein Verschwenken benachbarter Scharren (ein so genanntes Scharren-Paar) aufeinander zu und voneinander weg ausführen, wobei in diesem Fall bevorzugt ist, dass die zugehörigen Oberflächenprofile entgegengesetzt lateral (nach außen) geneigt ausgeführt sind. Insbesondere ist eingerichtet, dass die Verschwenkeinheit parallel bzw. gleichzeitig eine aufeinander zugerichtete Verschwenkbewegung der Scharren nach innen (hin zur bzw. in die Kulturpflanzenreihe) und danach eine voneinander weggerichtete Verschwenkbewegung der Scharren nach außen (weg von bzw. aus der Kulturpflanzenreihe) ausführen kann. Dabei kann über das jeweilige Oberflächenprofil erreicht werden, dass der Kulturboden durchzogen und ggf. aufgeworfenes Unkraut oder Krustenteile stets aus der Kulturpflanzenreihe ausgeschoben werden kann.

Die mindestens eine Verschwenkeinheit kann eine Hebelgelenkanordnung mit (mindestens oder genau) einem hydraulischen Zylinder umfassen, wobei der hydraulische Zylinder längenveränderlich ist und die Hebelgelenkanordnung verschwenkt. Es ist möglich, dass die Hebelgelenkanordnung eine Mehrzahl von Hebeln umfasst, die verschwenkbar auf bzw. an dem Träger gelagert sind. Der hydraulische Zylinder kann mit zumindest einem der Hebel und einem Festlager, z. B. dem Träger, angeordnet sein. Der hydraulische Zylinder kann mit einer Hydraulikflüssigkeit gefüllt sein, mittels der eine Zylinderstange (geregelt) ein- und ausfahrbar ist, so dass sich dessen Länge ändert. Durch die Längenänderung kann der daran befestigte Hebel verschwenkt werden, wobei dessen Bewegung dann andere Hebel ebenfalls verschwenkt. Die Hebel sind an die Stiele der Werkzeuge angeschlossen, so dass deren Bewegung in eine abgestimmte und gleichzeitige Verschwenkbewegung der Werkzeuge überführt wird. Bevorzugt kann der hydraulische Zylinder zwischen zwei Endpositionen (Eingefahren und Ausgefahren) umgeschaltet werden.

An der Hebelgelenkanordnung können mehrere Anbindungsstellen für den hydraulischen Zylinder vorgesehen sein, wobei eine Anbindung des hydraulischen Zylinders an unterschiedlichen Anbindungsstellen einen Schwenkbereich der Werkzeuge unterschiedlich einstellt. Die mehreren Anbindungsstellen sind bevorzugt an dem selben Hebel der Hebelgelenkanordnung ausgebildet, beispielsweise in Form von Anbindungsösen, an denen die ein- und ausfahrbare Zylinderstange befestigbar ist, und die an dem Hebel verteilt angeordnet sind. Durch die Anbindung des hydraulischen Zylinders an unterschiedlichen Anbindungsstellen, insbesondere mit unterschiedlicher Entfernung zu dem benachbarten Drehgelenk für diesen Hebel, wird kann bei gleichem Verfahrweg des hydraulischen Zylinders eine unterschiedliche (größere oder kleinere) Verschwenkbewegung des Hebels und damit auch der Werkzeuge vorgegeben und einstellbar sein.

Es kann vorgesehen sein, dass die mindestens eine Verschwenkeinheit entkoppelbar ist. Das meint mit anderen Worten insbesondere, dass der Wirkeingriff des hydraulischen Zylinders auf die Hebelgelenkanordnung (vorrübergehend) getrennt werden kann, insbesondere mechanisch entkoppelbar ist. Hierfür kann zum Beispiel die Anbindung an dem Hebel gelöst und der hydraulische Zylinder in einer Rastposition "geparkt" werden. Während der entkoppelten Situation wird die Verschwenkbewegung der Werkzeuge ausgesetzt, was z. B. die Möglichkeit eröffnet, dass die Bearbeitung des Kulturbodens (allein) mit Werkzeugen anderer Vorrichtungsaggregate und bei höherer Fahrgeschwindigkeit durchführbar ist.

Gemäß einem weiteren Aspekt wird ein Anhänger für eine Zugmaschine vorgeschlagen, welche zumindest ein Fahrwerk und mindestens ein Vorrichtungsmodul der hier vorgeschlagenen Art umfasst, wobei das Vorrichtungsmodul mittels eines federvorgespannten Rotationsmechanismus mit dem Fahrwerk verbunden ist. Der Anhänger kann direkt oder mittelbar an eine Zugmaschine (wie beispielsweise einen Traktor oder eine selbstfahrende Zugeinheit) angekoppelt werden. Es ist möglich, dass der Anhänger ein Anschlusselement umfasst, dass an einen Zugträger anordenbar ist, welche dann selbst mit der Zugmaschine verbindbar ist.

Das Fahrwerk kann als eine Art Rahmen oder Plattform ausgestaltet sein, welches insbesondere mit einer (nicht angetriebenen) Radanordnung verbindbar bzw. ausgestattet ist. Das Fahrwerk kann eine Niveaueinstelleinrichtung aufweisen, mit der die Scharren relativ zum Kulturboden einstellbar sind. Mit einer Niveaueinstelleinrichtung kann die Arbeitstiefe eingestellt werden, z. B. über die Höhendifferenz von Stützradkontakt mit dem Boden und Lage der Klinge. Es ist eine präzise Tiefenführung der Werkzeuge bzw. Scharren ermöglicht, beispielsweise über ein (ggf. separates) Führungsrad und eine Einstellung des Fahrwerks über ein (mechanisches) Einstellmittel. Weiter kann ein Einstellelement mit einer Federanordnung vorgesehen sein, wobei durch Belastung und Entlastung einer Feder der Anpressdruck der Werkzeuge hin zum Kulturboden verändert bzw. eingestellt wird. Es ist (alternativ oder kumulativ) möglich, dass eine Tiefenerfassung mit einem Sensor vorgesehen ist und eine Steuerung der Niveaueinstelleinrichtung die Arbeitstiefe der Scharren vorgibt, welche von einem (ggf. hydraulischen) Aktuator der Niveaueinstelleinrichtung eingestellt wird.

Das Fahrwerk stellt (rückwärtig) einen federvorgespannten Rotationsmechanismus zur Verfügung, mittels dem das Vorrichtungsmodul relativ zu dem Fahrwerk (über einen begrenzten Rotationswinkel) rotieren kann. Der Rotationsmechanismus kann ein Rotationsgelenk aufweisen, an dem das Vorrichtungsmodul rotierbar befestigt ist, beispielsweise mit einer Rotationswelle. Es kann mindestens eine Feder vorgesehen sein, durch die das Vorrichtungsmodul in eine bevorzugte Arbeitsstellung gedrückt und ggf. gehalten wird. In dieser Arbeitsstellung kann das Vorrichtungsmodul so ausgerichtet sein, dass die Werkzeuge bzw. deren Stiele im Wesentlichen senkrecht hin zum Kulturboden ausgerichtet sind. Die Federkraft kann eine vorgegebenen Vorspannkraft haben, so dass bei einer (üblichen) Bodenbearbeitung (also während der Fahrt) die Arbeitsstellung eingehalten wird. Treten jedoch Boden- oder Umgebungsbedingungen auf, die größer sind (z. B. weil die Werkzeuge auf ein Hindernis wie einen Stein treffen), dehnt die über die Werkzeuge induzierte Kraft die Feder(n), so dass das Vorrichtungsmodul die Arbeitsstellung verlässt durch Rotieren (nach hinten und oben). Fällt diese Kraft wieder ab, kann das Vorrichtungsmodul (ggf. gedämpft) wieder selbstständig in die Arbeitsstellung rotieren.

Es ist möglich, an dem Fahrwerk und in einer Fahrtrichtung vor und/oder hinter dem Vorrichtungsmodul mindestens ein weiteres Vorrichtungsaggregat zur Bearbeitung eines Kulturbodens vorzusehen, die (mindestens) ein abweichendes Werkzeug aus der Gruppe Hohlscheibe, Schneidscheibe oder Pflugschar aufweisen. Das Fahrwerk kann so gestaltet sein, dass wahlweise und in verschiedenen Kombinationen ein Vorrichtungsmodul und mindestens ein Vorrichtungsaggregat mit jedem der anderen Werkzeuge ausstattbar ist, wobei die verschiedenen Werkzeuge dann gemeinsam eine abgestimmte Bearbeitung des Kulturbodens ermöglichen. Eine Hohlscheibe ist eine konkav oder konvex geformte Eggenscheibe, die einen gezackten oder glatten Umfangsrand haben kann; sie kann Erde von der Reihe wegschieben, insbesondere eine obere Kruste. Eine Schneidscheibe ist eine eben geformte Eggenscheibe, die einen gezackten oder glatten Umfangsrand haben kann. Eine Pflugschar kann mit einem Scharstiel ausgeführt sein, an der eine oder mehrere Scharen angeordnet sind. Hat die Pflugschar mehrere Scharren, können diese versetzt hintereinander oder in einer anderen beliebigen Formation montiert sein, wobei sie insbesondere in einer Reihe und in Abhängigkeit von der Schnittbreite angeordnet sind.

Einem weiteren Aspekt folgend wird die Verwendung eines Vorrichtungsmoduls oder eines Anhängers der hier vorgeschlagenen Art zur Entfernung von Unkraut aus dem Kulturboden in Zwischenräumen in einer Reihe von Kulturpflanzen vorgeschlagen. Insbesondere kann die Vorrichtung verwendet werden bei der Bearbeitung von Kulturböden, wobei zumindest folgendes gegeben ist:
- die Kulturpflanze ist ausgewählt aus der folgenden Gruppe: Zuckerrübe, Kohl, Mais, Kürbis;
- die Zwischenräume zwischen den Kulturpflanzen einer Reihe haben eine Ausdehnung im Bereich von 7 bis 100 cm [Zentimeter] ;

Die Verwendung in Kombination mit Schneidscheiben wird insbesondere vorgeschlagen, wenn der Kulturboden mit Mulch bedeckt ist.

Die Verwendung in Kombination mit Hohlscheiben wird insbesondere vorgeschlagen, wenn der Kulturboden hart ist, beispielsweise eine Oberflächenkruste aufweist.

Selbstverständlich kann die übrige Beschreibung herangezogen werden, um das Vorrichtungsmodul oder den Anhänger bzw. deren Einsatz im Rahmen dieser Verwendung näher zu charakterisieren.

Mit den hier vorgeschlagenen Konzepten kann neben einer verbesserten und schonenderen Bodenbearbeitung auch eine verlängerte Einsatzzeit der Werkzeuge erreicht werden, insbesondere weil diese nicht verstopfen bzw. eine übermäßige Ansammlung von Unkraut an den Stielen vermieden werden kann. Hierdurch wird die Schneidqualität der Werkzeuge aufrechterhalten. Verstopfendes Material, wie z. B. Strohhalme und dergleichen, kann durch den Vorschub der Werkzeuge bzw. deren Oberflächenprofil und/oder Mündungspunkt des Stiele nach oben und hinten geleitet werden, wobei dieses an den Außenseiten der Scharren nach außen abgeleitet wird, sodass die Kulturpflanze von Unkraut oder diesem Material sicher befreit wird.

Die Verwendung unbestimmter Artikel ("ein", "eine", "einer" und "eines"), insbesondere in den Patentansprüchen und der diese wiedergebenden Beschreibung, ist als solche und nicht als Zahlwort zu verstehen. Entsprechend damit eingeführte Begriffe bzw. Komponenten sind somit so zu verstehen, dass diese mindestens einmal vorhanden sind und insbesondere aber auch mehrfach vorhanden sein können.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig.1:: ein Vorrichtungsmodul in einer perspektivischen Darstellung;
- Fig.2:: ein Vorrichtungsmodul in einer rückwärtigen Ansicht im Einsatz;
- Fig.3:: eine Scharre mit einem spezifischen Oberflächenprofil;
- Fig.4:: eine Draufsicht auf eine Verschwenkeinheit;
- Fig.5:: eine Seitenansicht eines Anhängers mit einem Vorrichtungsmodul im Einsatz;
- Fig.6:: eine Ausführungsvariante eines federvorgespannten Rotationsmechanismus;
- Fig.7:: eine perspektivische Ansicht einer weiteren Ausführungsform eines Anhängers im Einsatz;
- Fig. 8:: eine perspektivische Ansicht einer weiteren Ausführungsform eines Anhängers im Einsatz;
- Fig. 9:: ein weiteres Ausführungsbeispiel einer Scharre; und
- Fig. 10:: noch ein weiteres Ausführungsbeispiel einer Scharre.

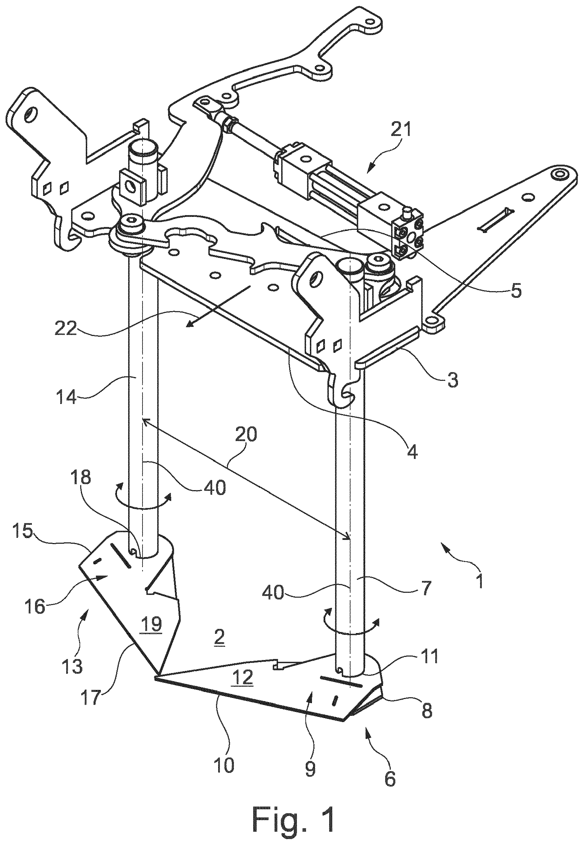

Fig. 1 zeigt schematisch und perspektivisch ein Vorrichtungsmodul 1 zur Bearbeitung eines Kulturbodens 2, das einen plattenförmigen Träger 3 aufweist, der mit einer Vorderkante 4 und einer Hinterkante 5 beschrieben werden kann. Hiermit kann auch eine (Betrachtungs-)Richtung 22 von der Hinterkante 5 zu der Vorderkante 4, wie mit dem Pfeil veranschaulicht, festgelegt werden.

Oberhalb und auf dem Träger 3 ist eine Verschwenkeinheit 21 zum Verschwenken der beiden Werkzeuge 6, 13 angeordnet.

Das erste Werkzeug 6 ist lateral (in Richtung 22 betrachtet) im linken äußeren Bereich des Trägers 3 angeordnet. Das zweite Werkzeug 13 ist lateral (in Richtung 22 betrachtet) im rechten äußeren Bereich des Trägers 3 angeordnet. Das erste Werkzeug 6 und das zweite Werkzeug 13 sind im Wesentlichen lateral symmetrisch zum Träger 3 mit einem vorgegebenen Abstand 20 zueinander angeordnet, wobei hier insbesondere der Abstand 20 zwischen den beiden Stielen der Werkzeuge 6, 13 zu bestimmen ist.

Das erste Werkzeug 6 hat einen ersten Stiel 7 und eine erste Scharre 8, wobei die erste Scharre 8 eine hin zum Träger 3 gerichtete erste Oberfläche 9 hat, die von einem ersten Rand 10 der ersten Scharre 8 begrenzt ist, in der der erste Stiel 7 in einem ersten Mündungspunkt 11 mündet und die ein erstes Oberflächenprofil 12 hat, das sich betrachtet in der Richtung 22 ausgehend vom ersten Mündungspunkt 11 weiter von dem Träger 3 (nach unten) entfernt und optional lateral (nach links außen) geneigt ist.

Das zweite Werkzeug 13 hat einen zweiten Stiel 14 und eine zweite Scharre 15, wobei die zweite Scharre 15 eine hin zum Träger 3 gerichtete zweite Oberfläche 16 hat, die von einem zweiten Rand 17 der zweiten Scharre 15 begrenzt ist, in der der zweite Stiel 14 in einem zweiten Mündungspunkt 18 mündet und die ein zweites Oberflächenprofil 19 hat, das sich betrachtet in der Richtung 22 ausgehend vom zweiten Mündungspunkt 18 weiter von dem Träger 3 (nach unten) entfernt und optional lateral (nach rechts außen) geneigt ist.

Soweit im Folgenden allgemein zu den Werkzeugen Sachverhalte erläutert werden, kann das für das erste Werkzeug und/oder das zweite Werkzeug gelten, soweit sich aus dem Gesamtzusammenhang nicht zwingend ergibt, dass dieser Sachverhalt zwingend so für alle Werkzeuge gelten muss.

Die Stiele 7, 14 durchdringen den Träger 3, wobei die darüber hinaus ragenden Stielabschnitte mit der Verschwenkeinheit in Wirkeingriff sind. Mittels der Verschwenkeinheit kann so ein Verschwenken der Werkzeuge 6, 13 über einen beschränkten Schwenkbereich von 0 bis maximal 80 Winkelgrad ausgeführt werden, wobei die Stiele 7, 14 um die zentralen Verschwenkachsen 40 gedreht werden.

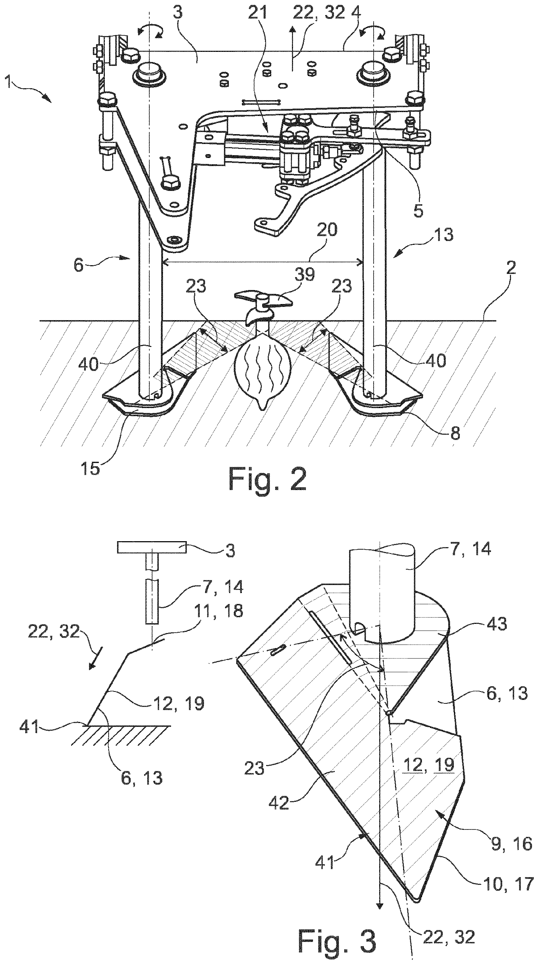

In Fig. 2 wird schematisch ein ähnliches Vorrichtungsmodul 1 im Einsatz gezeigt, also bei der Bearbeitung eines Kulturbodens 2. Der Kulturboden 2 weist eine Kulturpflanze 39 auf, um die herum die Bearbeitung stattfinden soll.

In diesem Fall ist der Träger 3 nach Art einer Sandwich-Platten-Konstruktion ausgeführt, innerhalb derer die Verschwenkeinheit 21 eingehaust ist. Mittels der Verschwenkeinheit 21 kann so ein Verschwenken der Werkzeuge 6, 13 über einen beschränkten Schwenkbereich 23 ausgeführt werden, wobei die Stiele 7, 14 um die zentralen Verschwenkachsen 40 gedreht werden.

Die Scharren 8, 15, der Schwenkbereich 23 und der Abstand 20 sind so eingerichtet, dass einerseits die Scharren 8, 15 und Stiele 7, 14 an der Kulturpflanze 39 sicher vorbeigeführt werden können (hier dargestellt: geöffnete Situation), andererseits die Scharren 8, 15 soweit in die Mitte bzw. unter den Träger 3 verschwenkt werden können, dass sich die Scharren 8, 15 teilweise in die Kulturpflanzenreihe bzw. vor/hinter die Kulturpflanze 39 erstrecken. Die Verschwenkeinheit 21 verschwenkt die Scharren 8, 15 aufeinander zu und voneinander weg, wobei die zugehörigen Oberflächenprofile 12, 19 entgegengesetzt lateral geneigt ausgeführt sind.

In dem dargestellten Einsatz stimmt die vorstehend spezifizierte Richtung 22 mit der Fahrtrichtung 32 überein, was regelmäßig einzuhalten ist.

Fig. 3 zeigt (rechts) eine konkrete Ausführungsvariante eines Werkzeuges 67,13, welches hier für das Vorrichtungsmodul bzw. die skizzierten Verwendungen vorgeschlagen wird. Weiter ist (links) schematisch eine Schnittansicht entlang der Richtung 22 bzw. Fahrtrichtung 32 veranschaulicht, damit die sphärische Ausgestaltung der Scharre 8, 15 besser erkennbar ist.

Die Scharre 8, 15 hat eine hin zum Träger 3 gerichtete Oberfläche 9, 16, die von einem Rand 10, 17 der Scharre 8, 15 begrenzt ist. Diese Oberfläche 9, 16 ist hier schraffiert dargestellt, wobei die unterschiedlichen Schraffuren unterschiedliche Neigungen und/oder Ausrichtungen der Oberflächenabschnitte aufzeigen soll.

Der Stiel 7, 14 setzt hier in einem Mündungspunkt 11, 18 (exzentrisch) innerhalb der Oberfläche 9, 16 und beabstandet zu dem Rand 10, 17 auf. Um den Mündungsabschnitt kann die Oberfläche 9, 16 mit einem (ebenen bzw. horizontalen) Plateau 43 ausgeführt sein, das Teil des Oberflächenprofils 12, 19 ist.

Betrachtet in einer Richtung 22 bzw. der Fahrtrichtung 32 entfernt sich die Oberfläche 9, 16 ausgehend vom Mündungspunkt 11, 18 weiter von dem Träger 3 und ist (optional) lateral geneigt. Dies ist hier beispielhaft mit einer sich in Richtung 22 bzw. der Fahrtrichtung 32 orientierten Klinge 41 (begrenzt durch einen geradlinigen Abschnitt des Randes 10, 17) erreicht, deren Klingenschräge 42 (in entgegengesetzter Blickrichtung) ausgehend von der Klinge 41 hin zum Mündungspunkt 11, 18 (jedenfalls anfänglich) ansteigt und nach außen geneigt ist. Bevorzugt sind Klinge 41 und Klingenschräge 42 so gestaltet, dass diese Vorgabe über einen beschränkten Schwenkbereich 23 von 0 bis maximal 120 Winkelgrad eingehalten ist.

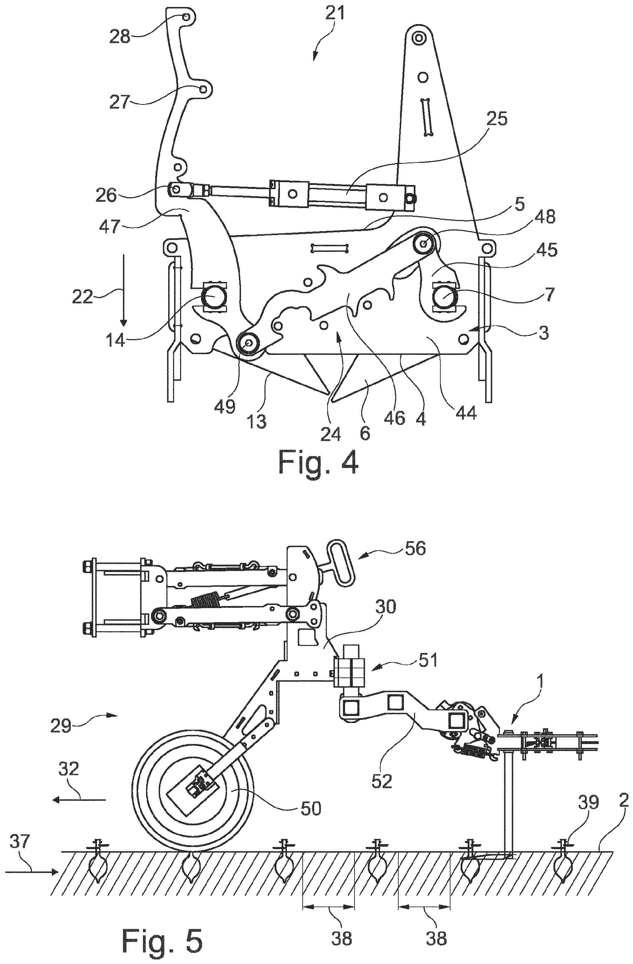

Fig. 4 zeigt eine Ausführungsvariante einer Verschwenkeinheit 21 am Träger 3 im Detail.

Die Verschwenkeinheit 21 ist hier mit einer Hebelgelenkanordnung 24 und einem hydraulischen Zylinder 25 umfasst, wobei der hydraulische Zylinder 25 längenveränderlich ist und die Hebelgelenkanordnung 24 verschwenkt.

Bei der Hebelgelenkanordnung 24 sind ein erstes Drehgelenk 48 und eines zweiten Drehgelenks 49 vorgesehen, welche an einer Basis 44 des Trägers 3 ausgebildet sind. Ein erster Hebel 45 greift an dem ersten Stiel 7 an und erstreckt sich bis zum ersten Drehgelenk 48. Dort ist er im Wirkeingriff mit einem zweiten Hebel 46, welcher sich bis zum zweiten Drehgelenk 49 erstreckt und dort mit einem dritten Hebel 47 im Wirkeingriff steht. Der dritte Hebel 47 ist einerseits mit dem zweiten Stiel 14 und dem hydraulischen Zylinder 25 in Wirkeingriff, wobei die Anlenkung des zweiten Stiels 13 zwischen den Anknüpfungsstellen von zweitem Hebel 46 und hydraulischen Zylinder 25 positioniert ist.

Wird der hydraulische Zylinder 25 betätigt, wird (aufgrund des festen Widerlagers des hydraulischen Zylinders an dem Träger 3) diese transversale Längenänderung in den dritten Hebel 47 eingeleitet, der aufgrund der beschriebenen Lagerung verschwenkt wird, so dass dem unmittelbar folgend die Stiele 14, 7 und weiteren Hebel 46, 45 verschwenkt werden.

An der Hebelgelenkanordnung 24, hier an dem dritten Hebel 47, sind mehrere Anbindungsstellen (eine erste Anbindungsstelle 26, eine zweite Anbindungsstelle 27, eine dritte Anbindungsstelle 28) für den hydraulischen Zylinder 25 vorgesehen, wobei eine Anbindung des hydraulischen Zylinders 25 an unterschiedlichen Anbindungsstellen 26, 27, 28 den Schwenkbereich der Werkzeuge unterschiedlich einstellt. Durch Ablösen des hydraulischen Zylinders 25 und ggf. Fixierung des hydraulischen Zylinders 25 und/oder einem der Hebel 45, 46, 47 an dem Träger 3 kann die Verschwenkeinheit 21 sogar insgesamt entkoppelt werden.

Eine Ausführungsvariante eines Anhängers 29 für eine hier nicht dargestellte Zugmaschine ist in Fig. 5 veranschaulicht. Der Anhänger 29 ist mit einem Fahrwerk 30 ausgeführt, das eine Niveauverstelleinrichtung 51, Räder 50 und einen Ausleger 52 umfasst. Mittels einer Niveauverstelleinrichtung 51 (hier nach Art einer Klemme ausgeführt) kann die geodätische Höhe des Auslegers 52 bzw. des dort befestigten Vorrichtungsmoduls 1 (mechanisch) eingestellt werden. Hierbei kann insbesondere die Tauchtiefe der Werkzeuge 6,13 in den Kulturboden 2 eingestellt werden. Weiter ist eine Belastungsverstellung 56 vorgesehen, mit der der Anpressdruck der Werkzeuge 6, 13 zum Kulturboden 2 eingestellt werden kann.

Der Anhänger 29 wird in einer Fahrtrichtung 32 regelmäßig parallel zu einer Reihe 37 von Kulturpflanzen 39 gezogen. Wie bereits erläutert, kann mit dem Vorrichtungsmodul 1 der Kulturboden 2 auch in den Zwischenräumen 38 der Reihe 37 von Kulturpflanzen 39 bearbeitet werden.

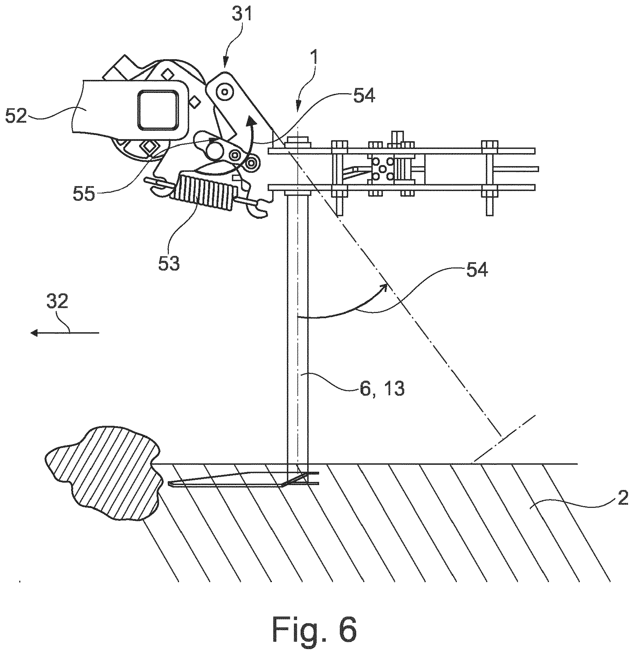

In Fig. 6 ist beispielhaft ein Detail aus Fig. 5 vergrößert herausgestellt. Dort ist veranschaulicht, dass das Vorrichtungsmodul 1 mittels eines federvorgespannten Rotationsmechanismus 31 mit dem Fahrwerk 30 verbunden ist. Wird das Werkzeug 6, 13 im Einsatz durch den Kulturboden 2 gezogen und stößt es auf einen erhöhten Widerstand, wie z. B. auf einen Stein oder dergleichen, kann das Werkzeug 6, 13 nach hinten auslenken, weil in diesem Fall eine Federkraft der Feder 53 überschritten wird, welche üblicherweise eine im Wesentlichen senkrecht Ausrichtung des Werkzeugs 6, 13 zum Kulturboden 2 gewährleistet. In diesem Fall rotiert das (gesamte) Vorrichtungsmodul 1 mit einer hier angedeuteten Rotationsbewegung 54 um ein Rotationsgelenk 55 des federvorgespannten Rotationsmechanismus 31.

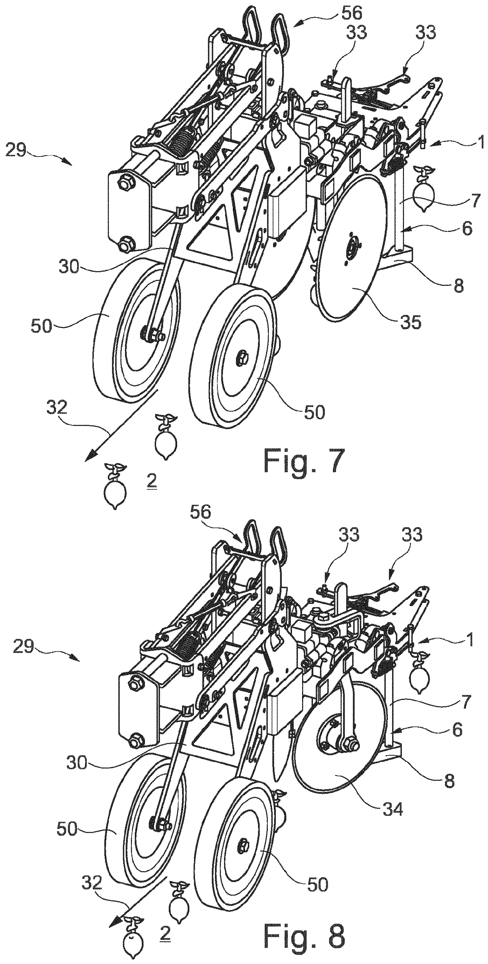

Fig. 7 veranschaulicht einen umfassend ausgestatteten Anhänger 29 in der perspektivischen Seitenansicht von vorne, wobei an dem Fahrwerk 30 und in Fahrtrichtung 32 zumindest vor, seitlich und/oder hinter dem Vorrichtungsmodul 1 weitere, flexibel bzw. variabel an dem Fahrwerk 30 bzw. dem Ausleger 52 ausgerichtet befestigbare Vorrichtungsaggregate 33 zur Bearbeitung eines Kulturbodens 2 vorgesehen ist, hier in Kombination mit eines Satzes bzw. Paares Schneidscheiben 35.

Das Vorrichtungsmodul 1 mit den rotierbaren Scharre 8, 15 kann insbesondere mit unmittelbar davor angeordneten Schneidscheiben 35 kombiniert werden. Die Schneidscheiben 35 können beispielsweise einen Durchmesser von ca. 30 cm und eine Eindringtiefe im Kulturboden 2 von ca. 5 cm haben. Sie können fluchtend vor die Stiele 7, 14 der rotierbaren Scharre 8, 15 positioniert sein und dieses somit "freischneiden". Gleichzeitig kann mit den rotierenden Scharren 8, 15 gewährleistet werden, dass (trotzdem) wenig Erdreich und/oder Unkraut in die Reihen der Kulturpflanzen hineinbewegt wird, so dass eine sehr schonende Bodenbearbeitung und ein effektiver Schutz für die Kulturpflanzen erreicht werden kann. Bei dieser Ansicht wird insbesondere ein (fluchtendes) Set aus Werkzeug 6 und (erster) Schneidscheibe 35 veranschaulicht, es ist aber auch erkennbar, dass links benachbart in gleicher Weise eine weitere (zweite) Schneidscheibe 35 vor dem verdeckten zweiten Werkzeug 13 bzw. zweiten Stiel 14 positioniert ist.

Diese Anordnung hat folgenden Vorteil: Die Schneidscheibe schneidet langes Material vor dem Stiel der Scharre weg, so dass sich kein langes Material um den Stiel herumwickeln kann. Die Schneidscheiben laufen jeweils in Fahrtrichtung betrachtet genau vor dem Stiel und dringt bevorzugt um ca, 2 cm tiefer in den Kulturboden ein als die Scharre dahinter.

Fig. 8 veranschaulicht auch einen ausgestatteten Anhänger 29 in der perspektivischen Seitenansicht von vorne, wobei vollumfänglich auch auf die Erläuterungen zur Fig. 7 zurückgegriffenwerden kann. Statt einem Set Schneidscheiben sind hier allerdings sogenannte Hohlscheiben 34 vorgesehen. Diese sind zwar auch jeweils in Fahrtrichtung betrachtet genau vor dem Stiel des Werkzeugs positioniert, jedoch auch schräg zur Fahrtrichtung ausgerichtet, so dass diese etwa einen Minimalspalt zum Durchlass der Kulturpflanzen bilden.

Diese Anordnung hat den folgenden Vorteil: Die Hohlscheiben 34 schneiden die Erde und räumen diese etwas von der Reihe Kulturpflanzen weg. Bevorzugt arbeitet diese mit einer Arbeitstiefe von ca. 2 cm im Kulturboden und ragt möglichst dicht an die Kulturpflanzen heran. Damit kann insbesondere verhindert werden, dass Bodenkruste mit den nachfolgenden Werkzeugen auf die Kulturpflanzen und/oder in unerwünscht großer Menge hin zu den Kulturpflanzen bewegt wird.

Es ist möglich, dass ggf. weitere Vorrichtungsaggregate 33 zur Bearbeitung eines Kulturbodens 2 vorgesehen sind, die ggf. auch nicht in bzw. an der Reihe Kulturpflanzen, sondern (nur) dazwischen arbeiten. Hierfür kann beispielsweise eine Pflugscharre oder dergleichen vorgesehen sein.

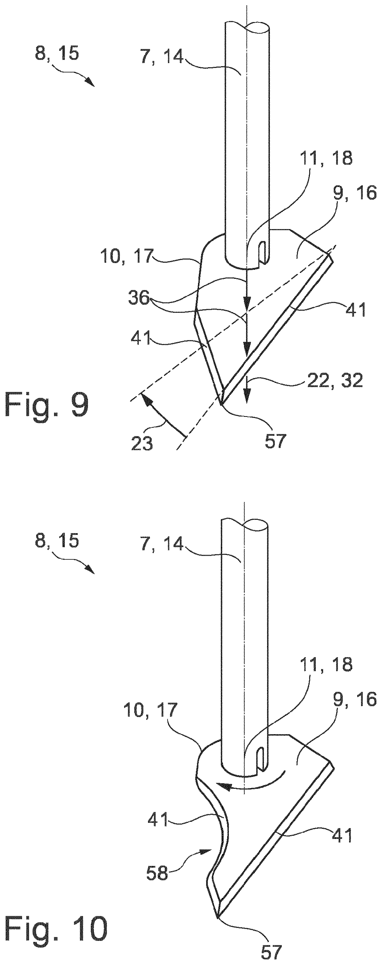

Fig. 9 und 10 zeigen weitere (bevorzugte) Gestalten einer Scharre 8, 15 mit einer hin zum (hier nicht gezeigten) Träger 3 gerichtete, im Wesentlichen ebene Oberfläche 9, 16, die von einem Rand 10, 17 der Scharre 8, 15 begrenzt ist. In der Oberfläche 9, 16 mündet ein Stiel 7, 14 in einem Mündungspunkt 11, 18, wobei der Mündungspunkt 11, 18 des Stiels 7, 14auf der Oberfläche 9, 16 der Scharre 8, 15 exzentrisch und entfernt zum Rand 10, 17 der Scharre 8, 15 angeordnet ist. Weiter bildet die Scharre 8, 15 eine vordere Klingenspitze 57 aus, von der beidseits lateral am Rand 10, 17 jeweils eine Klinge 41 ausbildet ist. Die Klinge 41 erstreckt sich mit anderen Worten über die Klingenspitze 57 hinweg.

In der Ausführungsform nach Fig. 9 sind beide Klinge 41 geradlinig ausgeführt ist, wobei die äußere Klinge 41 (rechts abgebildet) länger als die innere Klinge 41 ausgeführt ist.

Während die äußere Klinge 41 der Ausführungsvariante nach Fig. 10 (rechts abgebildet) geradlinig ausgeführt ist, weist die innere Klinge 41 (links abgebildet) einen (lokal begrenzten) Bogenabschnitt 58 auf. Der Bogenabschnitt 58 der inneren lateralen Klinge 41 kann so gestaltet sein, dass die Scharre 8, 15 beim Einschwenken in die Reihe der Kulturpflanzen (hier mit einem Pfeil unter dem Stiel 7, 14 angedeutet) diese mit einem Sicherheitsabstand umschwenkt.

Beispielhaft ist in Fig. 9 auch veranschaulicht, dass die Klinge 41 zumindest mit einer Distanz 36 von 1,5 cm (gesehen in Richtung 22, insbesondere in Fahrtrichtung 32) vor dem Mündungspunkt 11, 18 positioniert ist. Die Distanz 36 kann über den Schwenkbereich 23 variieren, wobei diese minimale Distanz von 1,5 cm jedenfalls eingehalten werden sollte.

Klarstellend sei darauf hingewiesen, dass die hier gezeigten Scharre 8, 15 der Fig. 9 und 10 alternativ bzw. sogar bevorzugt in den Vorrichtungen der vorherigen Figuren einsetzbar ist und insoweit die Erläuterungen entsprechend gelten.

Mit der hier offenbarten Erfindung können die mit Bezug auf den Stand der Technik benannten Probleme zumindest gelindert oder zumindest teilweise gelöst werden. Insbesondere wurden Vorrichtungen angegeben, die eine möglichst schonende bzw. umfassende Bearbeitung eines Kulturbodens ermöglichen, wobei das Risiko einer Beschädigung der Kulturpflanze reduziert und/oder die Verstopfungsneigung der Werkzeuge bzw. Reihen-Hackmaschinen gemindert wird. Es kann zudem erreicht werden, dass das Werkzeug bzw. die Reihen-Hackmaschinen robust ist und/oder einfach auf die Umgebungsbedingungen oder Wünsche des Nutzers angepasst betrieben wird.

### Bezugszeichenliste

- 1: Vorrichtungsmodul
- 2: Kulturboden
- 3: Träger
- 4: Vorderkante
- 5: Hinterkante
- 6: erstes Werkzeug
- 7: erster Stiel
- 8: erste Scharre
- 9: erste Oberfläche
- 10: erster Rand
- 11: erster Mündungspunkt
- 12: erstes Oberflächenprofil
- 13: zweites Werkzeug
- 14: zweiter Stiel
- 15: zweite Scharre
- 16: zweite Oberfläche
- 17: zweiter Rand
- 18: zweiter Mündungspunkt
- 19: zweites Oberflächenprofil
- 20: Abstand
- 21: Verschwenkeinheit
- 22: Richtung
- 23: Schwenkbereich
- 24: Hebelgelenkanordnung
- 25: hydraulischer Zylinder
- 26: erste Anbindungsstelle
- 27: zweite Anbindungsstelle
- 28: dritte Anbindungsstelle
- 29: Anhänger
- 30: Fahrwerk
- 31: federvorgespannter Rotationsmechanismus
- 32: Fahrtrichtung
- 33: Vorrichtungsaggregat
- 34: Hohlscheibe
- 35: Schneidscheibe
- 36: Distanz
- 37: Reihe
- 38: Zwischenraum
- 39: Kulturpflanze
- 40: Verschwenkachse
- 41: Klinge
- 42: Klingenschräge
- 43: Plateau
- 44: Basis
- 45: erster Hebel
- 46: zweiter Hebel
- 47: dritter Hebel
- 48: erstes Drehgelenk
- 49: zweites Drehgelenk
- 50: Rad
- 51: Niveauverstelleinrichtung
- 52: Ausleger
- 53: Feder
- 54: Rotationsbewegung
- 55: Rotationsgelenk
- 56: Belastungsverstellung
- 57: Klingenspitze
- 58: Bogenabschnitt

## Patentansprüche

1. Vorrichtungsmodul (1) zur Bearbeitung eines Kulturbodens (2), zumindest umfassend einen Träger (3) mit einer Vorderkante (4) und einer Hinterkante (5), an dem mindestens zwei Werkzeuge (6, 13) lateral mit einem Abstand (20) zueinander angeordnet sind, wobei dem Träger (3) mindestens eine Verschwenkeinheit (21) zum Verschwenken der Werkzeuge (6, 13) zugeordnet ist, wobei weiter jedes Werkzeug (6, 13) einen Stiel (7, 14) und eine Scharre (8, 15) aufweist, wobei jede Scharre (8, 15) eine hin zum Träger (3) gerichtete Oberfläche (9, 16) hat, die von einem Rand (10, 17) der Scharre (8, 15) begrenzt ist, in der jeweils ein Stiel (7, 14) in einem Mündungspunkt (11, 18) mündet, wobei der Mündungspunkt (11, 18) des Stiels (7, 14) auf der Oberfläche (9, 16) der Scharre (8, 15) exzentrisch und entfernt zum Rand (10, 17) der Scharre (8, 15) angeordnet ist und lateral am Rand (10, 17) mindestens eine Klinge (41) ausbildet, und weiter die mindestens eine Verschwenkeinheit (21) das Verschwenken der Werkzeuge (6, 13) um eine Verschwenkachse (40) entlang der Stiele (7, 14) ausführt.

2. Vorrichtungsmodul (1) nach Anspruch 1, wobei die mindestens eine Klinge (41) zumindest mit einer Distanz (36) von 1,5 cm vor dem Mündungspunkt (11, 18) positioniert ist.

3. Vorrichtungsmodul (1) nach Anspruch 1 oder 2, wobei die mindestens eine Verschwenkeinheit (21) das Verschwenken der Werkzeuge (6, 13) über einen beschränkten Schwenkbereich (23) von 0 bis maximal 80 Winkelgrad ausführt, wobei die Vorgabe zum Oberflächenprofil (12, 19) über diesen Schwenkbereich (23) eingehalten ist.

4. Vorrichtungsmodul (1) nach einem der vorhergehenden Ansprüche, wobei die mindestens eine Verschwenkeinheit (21) ein Verschwenken benachbarter Scharren (8, 15) aufeinander zu und voneinander weg ausführt und die zugehörigen Oberflächenprofile (12, 19) entgegengesetzt lateral geneigt ausgeführt sind.

5. Vorrichtungsmodul (1) nach einem der vorhergehenden Ansprüche, wobei die mindestens eine Verschwenkeinheit (21) eine Hebelgelenkanordnung (24) mit einem hydraulischen Zylinder (25) umfasst, wobei der hydraulische Zylinder (25) längenveränderlich ist und die Hebelgelenkanordnung (24) verschwenkt.

6. Vorrichtungsmodul (1) nach dem vorhergehenden Anspruch, wobei an der Hebelgelenkanordnung (24) mehrere Anbindungsstellen (26, 27, 28) für den hydraulischen Zylinder (25) vorgesehen sind, wobei eine Anbindung des hydraulischen Zylinders (25) an unterschiedlichen Anbindungsstellen (26, 27, 28) einen Schwenkbereich (23) der Werkzeuge (6, 13) unterschiedlich einstellt.

7. Vorrichtungsmodul (1) nach einem der vorhergehenden Ansprüche, wobei die mindestens eine Verschwenkeinheit (21) entkoppelbar ist.

8. Anhänger (29) für eine Zugmaschine, zumindest umfassend ein Fahrwerk (30) und mindestens ein Vorrichtungsmodul (1) nach einem der vorhergehenden Ansprüche, wobei das Vorrichtungsmodul (1) mittels eines federvorgespannten Rotationsmechanismus (31) mit dem Fahrwerk (30) verbunden ist.

9. Anhänger (29) nach Anspruch 8, wobei an dem Fahrwerk (30) und in einer Fahrtrichtung (32) zumindest vor oder hinter dem Vorrichtungsmodul (1) mindestens ein weiteres Vorrichtungsaggregat (33) zur Bearbeitung eines Kulturbodens mit einem abweichenden Werkzeug aus der Gruppe Hohlscheibe (34), Schneidscheibe (35) oder Pflugschar (36) vorgesehen ist.

10. Verwendung eines Vorrichtungsmoduls (1) nach dem vorhergehenden Ansprüche 1 bis 7 oder eines Anhängers (29) nach einem der Ansprüche 8 oder 9 zur Entfernung von Unkraut aus dem Kulturboden (2) in Zwischenräumen (38) in einer Reihe (37) von Kulturpflanzen (39).
